# EUROPEAN PATENT SPECIFICATION

(11) **EP 0 333 300 B1**
(45) Date of publication and mention of the grant of the patent: **20.09.1995**
(21) Application number: 89200683.4
(22) Date of filing: 16.03.1989
(51) Int. Cl.: C08J 5/04, C08K 7/02, C08L 73/00, D21H 17/46, B29B 11/16

(54) **Reinforced polymer articles**
Verstärkte Kunststoffgegenstände
Articles renforcés à base d'un polymère

(30) Priority: 18.03.1988 US 169715
(43) Date of publication of application: 20.09.1989
(73) Proprietor: SHELL INTERNATIONALE RESEARCH MAATSCHAPPIJ B.V., 2596 HR Den Haag (NL)
(72) Inventor: Danforth, Richard Louis, Missouri City Texas 77459 (US); Gergen, William Peter, Houston Texas 77070 (US); Neate, John Aubrey, Niles, Michigan 49120 (US)

(56) References cited:
- EP-A- 0 113 916
- EP-A- 0 180 863
- EP-A- 0 181 014
- EP-A- 0 284 169
- DE-A- 3 636 864
- FR-A- 2 500 021
- US-A- 4 645 565
- POLYMER HANDBOOK, 3rd edition, chapter VII,1989, John Wiley & Sons, New York, US ; M. KURATA et al.:"Viscosity-molecular weight relationships and unperturbed dimensions of linear chain molecules"

## Description

This invention is concerned with a process for producing reinforced polymer articles starting from an aqueous dispersion of a particulate thermoplastic polymer and reinforcing fibres having a minimum length of 2 mm.

It is known to produce fibre reinforced polymer articles of manufacture by various methods, e.g. melt-extrusion of a fibre-containing polymer composition to form sheet, film, slabs, tubes, piping, profiles etc., calendering of similar compositions to form sheet or film, injection-moulding, blow-moulding and compression-moulding of similar compositions to form moulded objects, particularly those having a reduced wall-thickness, e.g. cups, bottles and other containers. Such techniques present no particular problems provided staple fibres of relatively short length, i.e. having a length of less than 2 mm, are employed. With longer fibres very few of the above techniques are to date practised on a truly commercial scale since there are very restricted possibilities for achieving the desired degree of homogeneity in the mixture of fibre and polymer at the moment the very moulding or shaping is about to be effected. Since the reinforcing effect is a function of fibre length, there exists a general incentive to employ longer fibres, e.g. having a length of at least 5 mm.

It has been proposed to solve the problem related to the processing of long reinforcing fibres in thermoplastics by a completely different technology which is a paper-making process based upon using a thermoplastic polymer in particulate form e.g. a powder or granules, ground down to a very small particle size, as binder for the fibres. Thus, a paper is produced when the fibres are cellulose fibres, or a paper-like material or synthetic paper can be produced from metal fibres, glass fibres, carbon fibres, nylon fibres, polyaramid fibres, etc.

The commercial development of this different technology basically hinges around the use of olefin polymers, e.g. polyethylene, polypropylene or polybutene as the binding polymer. (c.f. EP-A-6930, EP-A-100720, EP-A-180863 and FR-A-2530724.) The binding performance of such polyolefins is however rather poor, most likely due to their outspoken hydrophobic properties. Because of this it is necessary to use various surfactants, detergents or flocculating agents in order to improve wettability performance. These auxiliary agents may even have to be employed at different stages of the paper-making process, which significantly complicates the technology. There is thus a need to find a simplified process.

It will be clear that the paper-making process when employed to thermoplastic polymer binders leads to flat sheet, just as in the case of paper. A separate moulding operation is required to produce articles like egg-boxes, food trays, cups, bowls and other containers.

Unexpectedly, it has now been found that another thermoplastic polymer has a very attractive wettability and that there is no strict need to employ the auxiliary agents referred to hereinabove. This polymer is an alternating copolymer of carbon monoxide and an olefinically unsaturated compound, provided its Limiting Viscosity Number is within the range of from 0.5 to 10 dl.g⁻¹. In addition the process of this invention obviates the need for a post-moulding operation.

Therefore, the present invention is concerned with a process for producing a fibre reinforced polymer article, comprising contacting an aqueous suspension of
1) 60 to 80 %wt, based on the weight of solid material, of reinforcing fibres having a length of at least 3 mm, and
2) 20 to 40 %wt of a particulate alternating copolymer of carbon monoxide and an olefinically unsaturated compound having a Limiting Viscosity Number, determined in m-cresol at 60 °C, of from 0.5 to 10 dl.g⁻¹, with the outer surface of a rotating wheel having an internal vacuum
   and which wheel is provided with inwardly or outwardly projecting moulds which mould surfaces are provided with material that is permeable to water, removing water from the material deposited in or on the moulds by the internal vacuum and an at least partial drying operation involving heating the deposited material and removing the self-supporting moulded article from the rotating wheel.

The particle size of the copolymer in the suspension should be such that adequate handling of the product is obtained. Both the presence of particles which are too small or too large for this purpose is to be avoided. Particle sizes of up to 0.5 mm are preferred. Preferred fibre lengths are from 3 to 9 mm.

Alternating copolymers of olefinically unsaturated compounds and carbon monoxide are known per se. They can be produced with a catalytic copolymerization process disclosed for example in EP-A 121965, and EP-A 181014.

The term "copolymer" as used in this specification includes terpolymers of an olefinically unsaturated compound, e.g. ethylene carbon monoxide and another olefinically unsaturated compound such as styrene, norbornene, propylene, butene-1, decene, vinylacetate, etc.

The term "alternating" as used herein defines those copolymers having the general formula -[-A - CO-]ₙ-, in which units -A- are derived from the olefinically unsaturated compound, e.g. -CH₂-CH₂-in a copolymer of ethylene and carbon monoxide. Preferred melting points are from 210 to 260 °C. Preferred limiting viscosity numbers are from 0.8 to 4.0 dl.g⁻¹. In a terpolymer some of the units -A-are replaced by a unit of another olefinically unsaturated compound. Such substitution effects a lowering of the melting point of the carbon monoxide copolymer, preferred terpolymers are those of ethylene, propylene and carbon monoxide having a melting point in the range of from 215 to 240 °C. Preferred copolymers are copolymers of ethylene and carbon monoxide.

The implementation of the process of this invention presents no problems to those familiar with paper-making technology. A homogeneous suspension in water of reinforcing fibres and polymer particles is prepared, which as in the case of paper-making has a low solids content, preferably within the range of from 0.05 to 15 %wt. The rotating wheel is dipped into the suspension at its lower part and the internal vacuum of the machinery ensures that the moulds provided on the surface of the wheel are covered with a deposit of polymer/fibre mass. The second function of the vacuum is to ensure drainage of water from the deposited layer, this drainage may be combined with simultaneous or subsequent drying of the wet deposit, usually this will be done by heating, for example with infra-red heating sources or by blowing hot air. The mould surfaces on the wheel are provided with material that is permeable to water, this permeability not being so large that the maintenance of the internal sub-atmospheric pressure would be impossible. A dense wire mesh or a few layers of woven cloth are examples of eligible mould materials.

The dewatering and drying should be continued long enough to ensure the self-supporting character of the moulded articles at the moment they are removed from the wheel, e.g. by peeling-off or by the action of a hydraulically driven piston.

The moulded articles can be subjected to operations ensuring increased dimensional stability such as further hot air-drying or drying by microwave or radiofrequency heating. Before or after such post-heating the articles may be subjected to trimming or to stamping operations to create a further detailed appearance.

The rotating wheel does not necessarily have a circular outer surface, other forms, e.g. a polygonal, e.g. hexa- or octagonal, cross-section is also feasible.

The reinforced copolymer compositions used in this invention may further comprise various additives such as fillers, colourants, plasticizers, thermostabilizers or antioxidants. Other polymeric constituents may be incorporated as well, for example polyethylene or polypropylene and it is also possible to use hybrids as reinforcing fibres. Preferred reinforcing fibres are those selected from the group consisting of glass fibres, hydrophylic silane coated glass fibres, carbon fibres, polypropylene fibres, high molecular weight, gel-spun polyethylene fibres, nylon (polyamide) fibres and polyaramide fibres.

### EXAMPLE

A powder of an ethylene/propylene/carbon monoxide terpolymer, with a crystalline melting point of 222 °C and a Limiting Viscosity Number of 1.76 dl.g⁻¹ (determined in m-cresol at 60 °C), was stirred to a dense suspension in demineralized water not containing any surfactant or flocculant. Then polyaramide or glass fibres were added, all fibres had a length of 6 mm. The fibres were defibrillated by continuous, vigorous stirring of the suspension having a solids content of 1.5 g.l⁻¹ . Then, a rotating wheel of hexagonal cross-section was dipped at its lower part into the suspension. Each surface of the wheel was provided with a mould for a food-tray, 22 cm long, 12 cm wide and 1.5 cm deep. The wheel was allowed to make 35 complete revolutions, under the action of an internal vacuum each time each mould passed the suspension a thin layer of deposit in the mould was formed, thus creating, layer by layer, adequate thickness. Then the wheel was lifted from the suspension, drainage was continued but now combined with blowing of hot air to effect complete drying. The articles were removed from the moulds and were all of acceptable self-supporting strength, wall thickness was 0.3 cm.

## Claims

1. A process for producing a fibre reinforced polymer article, comprising contacting an.aqueous suspension of
1) 60 to 80 %wt, based on the weight of solid material, of reinforcing fibres having a length of at least 3 mm, and
2) 20 to 40 %wt of a particulate alternating copolymer of carbon monoxide and an olefinically unsaturated compound having a Limiting Viscosity Number, determined in m-cresol at 60 °C, of from 0.5 to 10 dl.g⁻¹, with the outer surface of a rotating wheel having an internal vacuum and which wheel is provided with inwardly or outwardly projecting moulds which mould surfaces are provided with material that is permeable to water, removing water from the material deposited in or on the moulds by the internal vacuum and an at least partial drying operation involving heating the deposited material and removing the self-supporting moulded article from the rotating wheel.

2. A process as claimed in claim 1, in which the polymer is a copolymer of carbon monoxide and ethylene.

3. A process as claimed in claim 1, in which the polymer is a copolymer of carbon monoxide, ethylene and propylene.

4. A process as claimed in claim 1, in which the polymer has a Limiting Viscosity Number of from 0.8 to 4.0 dl.g⁻¹.

5. A process as claimed in claim 1, in which the copolymer has a melting point of from 210 to 260 °C.

6. A process as claimed in claim 1, in which the suspension comprises reinforcing fibres selected from glass fibres, hydrophylic silane coated glass fibres, carbon fibres, polypropylene fibres, high molecular weight, gel-spun polyethylene fibres, nylon (polyamide) fibres and polyaramide fibres.

7. A process as claimed in any one of claims 1 to 6, in which the moulded article is subjected to a final drying step involving radiofrequency or microwave heating.

## Patentansprüche

1. Verfahren zur Herstellung eines faserverstärkten Kunststoffgegenstands, wobei man eine wäßrige Suspension aus
1) 60 bis 80 Gew.-%, bezogen auf das Gewicht des Feststoffmaterials, Verstärkungsfasern mit einer Länge von mindestens 3 mm und
2) 20 bis 40 Gew.-% eines teilchenförmigen alternierenden Copolymers aus Kohlenmonoxid und einer olefinisch ungesättigten Verbindung mit einer in m-Cresol bei 60oC bestimmten Grenzviskositätszahl von 0,5 bis 10 dl.g-1 mit der Außenfläche eines sich drehenden, im Innern unter Vakuum stehenden Rads, das mit nach innen und außen vorstehenden Formen ausgestattet ist, deren Oberflächen mit einem wasserdurchlässigen Material versehen sind, kontaktiert, das Wasser aus dem aufgrund des im Innern herrschenden Vakuums in oder auf den Formen abgeschiedenen Material entfernt und zumindest einen Teiltrokenschritt durchführt, bei dem man das abgeschiedene Material erhitzt, und anschließend den selbsttragenden Formgegenstand von dem sich drehenden Rad entfernt.

2. Verfahren nach Anspruch 1, wobei das Polymer ein Kohlen-monoxid-Ethylen-Copolymer ist.

3. Verfahren nach Anspruch 1, wobei das Polymer ein Copolymer aus Kohlenmonoxid und Ethylen bzw. Propylen ist.

4. Verfahren nach Anspruch 1, wobei das Polymer eine Grenzviskositätszahl von 0,8 bis 4,0 dl.g-1 besitzt.

5. Verfahren nach Anspruch 1, wobei das Copolymer einen Schmelzpunkt von 210 bis 260oC aufweist.

6. Verfahren nach Anspruch 1, wobei die Suspension Verstärkungsfasern enthält, die ausgewählt sind aus Glasfasern, mit hydrophilem Silan beschichteten Glasfasern, Kohlenstoffasern, Polypropylenfasern, hochmolekularen gelgesponnenen Polyethylenfasern, Nylonfasern(Polyamidfasern) sowie Polyaramidfasern.

7. Verfahren nach einem der Ansprüche 1 bis 6, wobei der Formgegenstand einem abschließenden Trocknungsschritt durch Erhitzen mittels Radiofrequenzen oder Mikrowellen unterzogen wird.

## Revendications

1. Un procédé pour la préparation d'un article en polymère renforcé par des fibres, selon lequel on met en contact une suspension aqueuse de
1) 60 à 80% en poids, en se basant sur le poids du produit solide, de fibres de renforcement, qui présentent une longueur d'au moins 3 mm, et
2) 20 à 40% en poids, d'un copolymère particulaire alterné de monoxyde de carbone et d'un composé à insaturation oléfinique présentant un indice limite de viscosité, déterminé dans le n-crésol à 60°C, de 0,5 à 10 dl.g⁻¹, à l'aide de la surface externe d'une roue rotative présentant un vide interne, cette roue étant pourvue de moules en relief vers l'intérieur ou l'extérieur, tandis que les surfaces du moule sont pourvues d'un matériau qui est perméable à l'eau, en éliminant l'eau du matériau déposé dans et sur les moules grâce au vide interne et un traitement de séchage au moins partiel qui implique le chauffage du matériau déposé et l'élimination de l'article moulé autoportant de la roue rotative.

2. Un procédé tel que revendiqué dans la revendication 1, dans lequel le polymère est un copolymère de monoxyde de carbone et d'éthylène.

3. Un procédé tel que revendiqué dans la revendication 1, dans lequel le polymère est un copolymère de monoxyde de carbone, d'éthylène et de propylène.

4. Un procédé tel que revendiqué dans la revendication 1, dans lequel le polymère présente un indice de viscosité limite de 0,8 à 4,0 dl.g⁻¹.

5. Un procédé tel que revendiqué dans la revendication 1, dans lequel le copolymère présente un point de fusion de 210 à 260°C.

6. Un procédé tel que revendiqué dans la revendication 1, dans lequel la suspension comporte des fibres de renforcement choisies parmi les fibres de verre, les fibres de verre hydrophiles revêtues de silane, les fibres de carbone, les fibres de polypropylène, les fibres de polyéthylène de poids moléculaire élevé, filées à partir d'un gel, des fibres de nylon (polyamide) et les fibres de polyaramide.

7. Un procédé tel que revendiqué dans l'une quelconque des revendications 1 à 6, dans lequel l'article moulé est soumis à une étape de séchage final impliquant un chauffage par fréquence radio ou microonde.
